(19) Europäisches Patentamt
European Patent Office
Office européen des brevets

(11) **EP 2 483 323 B1**

(12) **EUROPÄISCHE PATENTSCHRIFT**

(45) Veröffentlichungstag und Bekanntmachung des Hinweises auf die Patenterteilung:
**04.12.2013 Patentblatt 2013/49**

(21) Anmeldenummer: **10757196.0**

(22) Anmeldetag: **22.09.2010**

(51) Int Cl.:
**C08G 101/00** (2006.01)    **C08G 18/36** (2006.01)
**C08G 18/48** (2006.01)    **C08G 18/66** (2006.01)

(86) Internationale Anmeldenummer:
**PCT/EP2010/063935**

(87) Internationale Veröffentlichungsnummer:
**WO 2011/039082 (07.04.2011 Gazette 2011/14)**

(54) **VERFAHREN ZUR HERSTELLUNG VON POLYURETHAN-HARTSCHAUMSTOFFEN**

PROCESS FOR PREPARING POLYURETHANE RIGID FOAMS

PROCÉDÉ DE PRÉPARATION DE MOUSSES RIGIDES DE POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **29.09.2009 EP 09171618**

(43) Veröffentlichungstag der Anmeldung:
**08.08.2012 Patentblatt 2012/32**

(73) Patentinhaber: **BASF SE**
**67056 Ludwigshafen (DE)**

(72) Erfinder:
• **GIESKER, Christiane**
**49080 Osnabrück (DE)**
• **KLASSEN, Johann**
**32351 Stemwede-Oppendorf (DE)**
• **SEIFERT, Holger**
**49163 Bohmte (DE)**
• **SCHÜTTE, Markus**
**49080 Osnabrück (DE)**

(56) Entgegenhaltungen:
**EP-A1- 0 672 697**    **EP-A1- 0 900 811**
**US-A1- 2006 235 102**    **US-A1- 2008 051 481**

Bemerkungen:
Die Akte enthält technische Angaben, die nach dem Eingang der Anmeldung eingereicht wurden und die nicht in dieser Patentschrift enthalten sind.

EP 2 483 323 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gegenstand der Erfindung ist ein Verfahren zur Herstellung von Polyurethan-Hartschaumstoffen durch Umsetzung von Polyisoycanaten mit Verbindungen mit mindestens zwei mit Isocyanatgruppen reaktiven Wasserstoffatomen.

Polyurethan-Hartschaumstoffe sind seit langem bekannt und werden vorwiegend zur Wärme- und Kälteisolation, z. B. in Kühlgeräten, in Warmwasserspeichern, in Fernwärmerohren oder im Bauwesen, beispielsweise in Sandwichelementen, eingesetzt. Eine zusammenfassende Übersicht über die Herstellung und Anwendung von Polyurethan-Hartschaumstoffen findet sich beispielsweise im Kunststoff-Handbuch, Band 7, Polyurethane, 1. Auflage 1966, herausgegeben von Dr. R. Vieweg und Dr. A. Höchtlen, 2. Auflage 1983, herausgegeben von Dr. Günter Oertel, und 3. Auflage 1993, herausgegeben von Dr. Günter Oertel, Carl Hanser Verlag, München, Wien.

Ihre Herstellung erfolgt zumeist durch Umsetzung von Polyisocyanaten mit Verbindungen mit mindestens zwei mit Isocyanatgruppen reaktiven Wasserstoffatomen in Anwesenheit von Katalysatoren, Treibmitteln sowie Hilfs- und/oder Zusatzstoffen.

Wesentliche Anforderungen an Polyurethan-Hartschaumstoffe sind eine niedrige Wärmeleitfähigkeit, eine gute Fließfähigkeit, eine ausreichende Haftung des Schaums an den Deckschichten und gute mechanische Eigenschaften.

Insbesondere bei Polyurethan-Hartschaumstoffen, die unter Verwendung von Wasser als Treibmittel hergestellt werden, ist die Haftung der Schaumstoffe häufig unzureichend.

US 5798533 beschreibt die Verwendung spezieller Katalysatoren zur Verbesserung der Haftung von rein wassergetriebenen Hartschäumen zur Verbesserung der Haftung zu Polystyrol oder ABS für den Einsatz in Kühlgeräten. Dies kann jedoch die Fließfähigkeit und mechanischen Eigenschaften der Schaumstoffe negativ beeinflussen.

WO 2004009667 beschreibt die Verwendung von Graft-Polyolen in rein wassergetriebenen Hartschaum-Systemen zur Verringerung der Versprödung des Schaums sowie der Verbesserung der Haftung zu anderen Substraten. Graft-Polyole sind jedoch teuer und häufig unverträglich mit anderen Bestandteilen der Polyurethan-Systeme.

EP 1806374 beschreibt Polyurethan-Hartschaumstoffe für Kühlgeräte mit verbesserter Haftung durch Verwendung von alkoxylierten Monoaminen wie z.B. Anilin. Diese Verbindungen können jedoch die Verarbeitungseigenschaften der Schaumstoffe negativ beeinflussen.

EP 672697 beschreibt ein Verfahren zur Herstellung von im wesentlichen geschlossenzelligen Urethan-, Harnstoff- und Biuretgruppen aufweisenden Hartschaumstoffen mit hervorragender Haftung an festen Oberflächen und deren Verwendung als Dämmstoffe und/oder zur Verstärkung von mechanischen Konstruktionsteilen, wobei die Isocyanatreaktive Komponente Umsetzungsprodukte aus Rizinusöl, Aminen und/oder Hydroxyverbindungen enthält, deren OH-Zahl 200 bis 500 mg KOH/g beträgt, und keine FCKW als Treibmittel eingesetzt werden.

Es wurde nun überraschenderweise gefunden, dass Polyurethan-Hartschaumstoffe, die ganz oder überwiegend unter Verwendung von Wasser als Treibmittel hergestellt werden, eine verbesserte Haftung aufweisen, wenn das Schaumsystem Rizinusöl und eine Verbindung, ausgewählt aus der Gruppe, enthaltend Alkylencarbonate, Kohlensäureamide und Pyrrolidone, enthält.

US 2008051481 beschreibt u.a. die Verwendung von Propylencarbonat oder Rizinusöl als Haftvermittler, insbesondere bei Verwendung kalter Formen, für spezielle Hartschaum-Systeme mit guten Flammschutzeigenschaften. Die vorteilhafte Verwendung halogenierter Polyole in Kombination mit einem weiteren Flammschutzmittel wird erwähnt. Die Hartschäume sind zur Verwendung im Bereich Bau gedacht. Hartschäume, die im Bereich Kühlschrank eingesetzt werden, enthalten üblicherweise keine halogenierten Polyole und auch keine Flammschutzmittel, da dies (zumindest heute noch nicht) als wichtige technische Anforderung angesehen wird.

US 2008051481 beschreibt flammgeschützte Polyurethan-Hartschaumstoffe, die unter Verwendung von halogenierten, insbesondere bromierten Polyolen hergestellt wurden. Als Treibmittel werden vorzugsweise physikalische Treibmittel, gegebenenfalls unter Mitverwendung von Wasser als Co-Treibmittel, verwendet. Um die Haftung dieser Produkte zu verbessern, wird der Einsatz von Haftvermittlern beschrieben. Neben einer Reihe von anderen Stoffen, wird auch die Verwendung von Propylencarbonat oder Rizinusöl vorgeschlagen.

Die in US 2008051481 beschriebenen halogenierten Flammschutzmittel werden üblicherweise nicht bei Schaumstoffen verwendet, die in Kühlgeräten eingesetzt werden.

Gegenstand der Erfindung ist ein Verfahren zur Herstellung von Polyurethan-Hartschaumstoffen durch Umsetzung von

    a) Polyisocyanaten mit

    b) Verbindungen mit mindestens zwei mit Isocyanatgruppen reaktiven Wasserstoff-atomen in Gegenwart von

    c) Treibmitteln,

dadurch gekennzeichnet, dass die Komponente b) Rizinusöl bi) enthält und dass die Umsetzung in Gegenwart einer Verbindung d), ausgewählt aus der Gruppe, enthaltend Alkylencarbonate, Kohlensäureamide und Pyrrolidone, durchgeführt wird.

Das Alkylencarbonat ist vorzugsweise Ethylencarbonat und/oder Propylencarbonat, besonders bevorzugt Propylencarbonat.

Als Kohlensäureamide werden vorzugsweise Harnstoff und/oder Alkylharnstoffe eingesetzt. Die Alkylharnstoffe sind insbesondere Tetramethylharnstoff und Diisobutylharnstoff.

Das Pyrrolidon ist insbesondere 1-Methyl-2-pyrrolidon.

Die Komponente d) wird vorzugsweise in einer Menge von 1,5-15 Gew.%, bezogen auf das Gewicht der Komponente b), eingesetzt.

Dabei können die genannten Komponenten einzeln oder in beliebigen Mischungen untereinander eingesetzt werden. Vorzugsweise wird Propylencarbonat eingesetzt.

Die Komponente d) wird vorzugsweise bei der Herstellung der Hartschaumstoffe vorzugsweise den Verbindungen mit mindestens zwei mit Isocyanatgruppen reaktiven Wasserstoffatomen zugesetzt.

Das Rizinusöl bi) wird vorzugsweise in einer Menge von 1-20 Gew.-%, bezogen auf das Gewicht der Komponente b), eingesetzt.

Als Treibmittel c) wird, wie oben beschrieben, Wasser eingesetzt. Dabei kann das Wasser als alleiniges Treibmittel eingesetzt werden. Es ist auch möglich, das Wasser im Gemisch mit anderen, insbesondere physikalischen Treibmitteln einzusetzen. Dabei sollte das Wasser mindestens in einer solchen Menge eingesetzt werden, die einer Treibwirkung von 50 % entspricht.

Dies kann mithilfe der Gasmolmengen ermittelt werden. Die Treibvolumina der einzelnen Treibmittel werden errechnet und addiert:

$$n[mol] = m[g] / M[g/mol]$$

n= Molmenge
m= Masse
M= Molekulargewicht

$$Vol_{Gas} \text{ pro 100g Polyolkomponente } [l] = n[mol] * 22,414 \, [l/mol]$$

$$Vol_{Gas} \text{ pro 100g PUR } [l] = (Vol_{Gas} \text{ pro 100g Polyolkomp. } [l] / \text{Mischungsverhältnis (Polyolanteil + Isoanteil)}) * 100.$$

Zu den neben den beschriebenen Polyetheralkoholen für das erfindungsgemäße Verfahren eingesetzten Ausgangsverbindungen ist im Einzelnen folgendes zu sagen:

Als organische Polyisocyanate a) kommen alle bekannten organischen Di- und Polyisocyanate in Betracht, vorzugsweise aromatische mehrwertige Isocyanate.

Im einzelnen seien beispielhaft genannt 2,4- und 2,6-Toluylen-diisocyanat (TDI) und die entsprechenden Isomerengemische, 4,4'-, 2,4'- und 2,2'-Diphenylmethandiisocyanat (MDI) und die entsprechenden Isomerengemische, Mischungen aus 4,4'-und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Uretdion-, Carbamat-, Isocyanurat-, Carbodiimid-, Allophanat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'-, 4,4'-Diphenylmethandiisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI, insbesondere mit einem NCO-Gehalt von 29 bis 33 Gew.-% und einer Viskosität bei 25°C im Bereich von 150 bis 1000 mPas.

Als Verbindungen mit mindestens zwei gegenüber Isocyanatgruppen reaktiven Wasserstoffatomen b), die neben der Komponente bi) eingesetzt werden, kommen solche in Betracht, die mindestens zwei reaktive Gruppen, bevorzugt OH-Gruppen, enthalten, insbesondere Polyetheralkohole und/oder Polyesteralkohole mit OH-Zahlen im Bereich von 25 bis 800 mg KOH/g.

Die eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die eingesetzten Polyesteralkohole haben zumeist eine Funktionalität von 1,5 - 4.

Insbesondere kommen Polyetheralkohole, die nach bekannten Verfahren, beispielsweise durch anionische Polymerisation von Alkylenoxiden an H-funktionellen Startsubstanzen in Gegenwart von Katalysatoren, vorzugsweise Alkalihydroxiden oder Doppelmetallcyanidkatalysatoren (DMC-Katalysatoren), hergestellt werden, zum Einsatz.

Als Alkylenoxide werden zumeist Ethylenoxid oder Propylenoxid, aber auch Tetrahydrofuran, verschiedene Butylenoxide, Styroloxid, vorzugsweise reines 1,2-Propylenoxid, eingesetzt. Die Alkylenoxide können einzeln, alternierend nacheinander oder als Mischungen verwendet werden.

Als Startsubstanzen kommen insbesondere Verbindungen mit mindestens 2, vorzugsweise 2 bis 8 Hydroxylgruppen oder mit mindestens zwei primären Aminogruppen im Molekül zum Einsatz.

Als Startsubstanzen mit mindestens 2, vorzugsweise 2 bis 8 Hydroxylgruppen im Molekül werden vorzugsweise Trimethylolpropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startsubstanzen mit mindestens zwei primären Aminogruppen im Molekül werden vor-zugsweise aromatische Di- und/oder Polyamine, beispielsweise Phenylendiamine, und 4,4'-, 2,4'- und 2,2'-Diamino-diphenylmethan sowie aliphatische Di- und Polyamine, wie Ethylendiamin, eingesetzt.

Die Polyetheralkohole besitzen eine Funktionalität von vorzugsweise 2 bis 8 und Hydroxylzahlen von vorzugsweise 25 mg KOH/g bis 800 mg KOH/g und insbesondere 150 mg KOH/g bis 570 mg KOH/g.

In einer bevorzugten Ausführungsform des erfindungsgemäßen Verfahrens enthält die Komponente b) mindestens einen Polyetheralkohol bii), der eine Hydroxylzahl im Bereich zwischen 350 und 600 und eine Funktionalität im Bereich zwischen 3,5 und 5,5 aufweist.

Der Polyetheralkohol bii) wird vorzugsweise durch Anlagerung von Ethylenoxid und/oder Propylenoxid, vorzugsweise Propylenoxid, an H-Funktionelle Startsubstanzen hergestellt. Als Startsubstanzen werden vorzugsweise die oben aufgeführten Zucker, insbesondere Saccharose oder Sorbit, eingesetzt. Üblicherweise werden die Zucker in Gegenwart von sogenannten Co-Startern, zumeist bei Raumtemperatur flüssigen 2- oder 3-funktionellen Alkoholen, wie Glyzerin, Trimethylolpropan, Ethylenglykol, Propylenglykol, oder Wasser mit den Alkylenoxiden umgesetzt. Als Katalysatoren werden üblicherweise basische Verbindungen, vorzugsweise Kaliumhydroxid, oder Amine eingesetzt.

Der Polyetheralkohol bii) wird vorzugsweise in einer Menge von 35-55 Gew.-%, bezogen auf das Gewicht der Komponente b), eingesetzt. In diesem Bereich wird eine besonders gute Haftung erzielt, weiterhin kann dabei die Sprödigkeit des Schaums verringert werden.

In einer weiteren bevorzugten Ausführungsform enthält die Komponente b) mindestens einen Polyetheralkohol biii). Hierbei handelt es sich um einen 2- bis 3-funktionellen Polyetheralkohol mit einer Hydroxylzahl im Bereich zwischen 150 und 450 mg KOH/g, Als Startsubstanzen werden vorzugsweise Glyzerin und/oder Trimethylolpropan und als Alkylenoxid Ethylenoxid und/oder Propylenoxid, insbesondere Propylenoxid, eingesetzt. Die Komponente biii) wird vorzugsweise in einer Menge von 18-35 Gew.-%, bezogen auf das Gewicht der Komponente b), eingesetzt. In einer bevorzugten Variante ist der Polyetheralkohol biii) ein 3-funktioneller Polyetheralkohol mit einer Hydroxylzahl im Bereich zwischen 150 und 420 mg KOH/g.

In einer besonders bevorzugten Ausführungsform des erfindungsgemäßen Verfahrens werden als Komponente biii) mindestens ein Polyetheralkohol biiia) und mindestens ein Polyetheralkohol biiib) eingesetzt.

Bei Polyetheralkohol biiia) handelt es sich um einen dreifunktionellen, vorzugsweise mit Trimethylolpropan gestarteten Polyetheralkohol mit einer Hydroxylzahl im Bereich zwischen 150 und 200 mg KOH/g.

Bei Polyetheralkohol biiib) handelt es sich um einen dreifunktionellen, vorzugsweise mit Glyzerin gestarteten Polyetheralkohol mit einer Hydroxylzahl im Bereich zwischen 350 und 420 mg KOH/g.

Durch den Einsatz der Polyetheralkohole biii) kann die Phasenstabilität der Polyolkomponente verbessert werden.

Zu den Verbindungen mit mindestens zwei gegenüber Isocyanat reaktiven Wasserstoffatomen gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente, eingesetzt.

Die Herstellung der Hartschaumstoffe wird üblicherweise in Anwesenheit von Treibmitteln, Katalysatoren, Flammschutzmitteln und Zellstabilisatoren sowie, falls erforderlich weiteren Hilfs- und/oder Zusatzstoffen durchgeführt.

Als Treibmittel wird, wie oben beschrieben, ausschließlich oder überwiegend Wasser verwendet, das mit Isocyanatgruppen unter Abspaltung von Kohlendioxid bzw. Kohlendioxid und Kohlenmonoxid reagiert. In Kombination mit Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50°C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die Treibmittel werden zumeist ausgewählt aus der Gruppe, enthaltend Ameisensäure, Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Beispielhaft seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,3,3,3-Pentafluorpropen, 1,1,1,3,3-Pentafluorbutan, 1,1,1,3,3-Pentafluorpropan, 1,1,1,2-Tetrafluorethan, 1,1,1,2,3-Pentafluorpropen, 1-Chlor-3,3,3-trifluorpropen, Difluorethan und Heptafluorpropan. Die genannten physikalischen Treibmittel können allein oder in beliebigen Kombinationen untereinander eingesetzt werden.

Als Katalysatoren werden insbesondere Verbindungen eingesetzt, welche die Reaktion der Isocyanatgruppen mit den mit Isocyanatgruppen reaktiven Gruppen stark beschleunigen. Solche Katalysatoren sind beispielsweise basische Amine, wie sekundäre aliphatische Amine, Imidazole, Amidine, Alkanolamine, Lewissäuren oder metallorganische Verbindungen, insbesondere solche auf Basis von Zinn. Auch Katalysatorsysteme, bestehend aus einer Mischung verschiedener Katalysatoren, können eingesetzt werden.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt. Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Antioxidantien, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Wie bereits ausgeführt, werden bei dem erfindungsgemäßen Verfahren keine halogenhaltigen Flammschutzmittel eingesetzt.

Zur Herstellung der Hartschaumstoffe auf Isocyanatbasis werden die Polyisocyanate und die Verbindungen mit mindestens zwei mit Isocyanatgruppen reaktiven Wasserstoffatomen in solchen Mengen zur Umsetzung gebracht, dass der Isocyanatindex im Falle der Polyurethan-Schaumstoffe in einem Bereich zwischen 100 und 220, vorzugsweise zwischen 115 und 180, liegt.

Zur Herstellung der Polyurethan-Hartschaumstoffe werden die Polyisocyanate a) und die Komponente b) in solchen Mengen zur Umsetzung gebracht, dass die Isocyanat-Kennzahl 90 bis 350, bevorzugt 100 bis 180, mehr bevorzugt 110 bis 140 beträgt.

Als besonders vorteilhaft hat es sich erwiesen, nach dem Zweikomponenten-Verfahren zu arbeiten und die Verbindungen mit mindestens zwei mit Isocyanatgruppen reaktiven Wasserstoffatomen zusammen mit den Treibmitteln, Schaumstabilisatoren und Flammschutzmitteln sowie den Katalysatoren und Hilfs- und/oder Zusatzstoffen zu einer sogenannten Polyolkomponente zu vereinigen und diese mit den Polyisocyanaten oder den Mischungen aus den Polyisocyanaten und gegebenenfalls Treibmitteln, auch als Isocyanatkomponente bezeichnet, zur Umsetzung zu bringen.

Durch das erfindungemäße Verfahren ist es gelungen, die Haftung von ganz oder überwiegend mit Wasser getriebenen Polyurethan-Schaumstoffen zu verbessern. Weiterhin konnten die mechanischen Eigenschaften der Schaumstoffe sowie auch die Phasenstabilität der Polyolkomponente verbessert werden.

Die Erfindung soll an den nachfolgenden Beispielen näher erläutert werden:

Übersicht Messmethoden:

Haftungsmessungen:

Die Messung der Haftung des Polyurethan-Schaumstoffes zu Metalloberflächen erfolgte mittels einer mit Aluminium-beschichteten Papier ausgelegten Kastenform der Dimension 200 x 200 x 80 mm bei einer Formtemperatur von 35 °C. Der Schaum wird auf die mit Aluminium beschichtete Fläche aufgetragen. Nach Eintrag des Reaktionsgemisches wird die Form geschlossen und der Prüfkörper nach 7 Min. entformt. Die der Bodenseite der Form zugewandte Aluminium-beschichtete Seite des Prüfkörpers wird anschließend mit einem Messer in einem Abstand von 6 cm eingeritzt. Die Bestimmung der Haftung erfolgte 10 Min. nach Entformung mit Hilfe einer Zugprüfmaschine, wobei das beschichtete Papier mit einer Zuggeschwindigkeit von 100 mm/Min. senkrecht zur Formkörperebene über eine Umlenkrolle abgezogen wird und die mittlere hierfür aufzuwendende Kraft gemessen wird.

Bestimmung der Phasenstabilität der Polyol-Komponente:

Die einzelnen Bestandteile der Polyolkomponente wurden zusammen mit dem Treibmittel intensiv vermischt und anschließend in einem Ultraschallbad von eingerührten Luftblasen befreit und in verschlossenen Reagenzgläsenr bei Raumtemperatur aufbewahrt. Die Phasenstabilität ist die Zeitdauer, bei der die Mischung bei Raumtemperatur gelagert werden kann, ohne dass es zu einer optisch wahrnehmbaren Trübung bzw. Phasentrennung der Komponente kommt.

Bestimmung der Sprödigkeit der Hartschäume:

Die Sprödigkeit wird qualitativ durch Eindrücken der Schäume mit dem Daumen im Randbereich ermittelt. Spröde Schäume zeichnen sich durch eine irreversible Verformung des Schaumstoffes bei bereits geringer Deformation aus.

Beispiele:

Die in der Tabelle 1 angegebenen Polyolkomponenten wurden mit der angegebenen Menge an Isocyanat-Komponente mit einem Laborrührer mit einer Rührgeschwindigkeit von 1400 Umdrehungen pro Min. und einer Rührzeit von 10 s in einem Becher intensiv vermischt und zur Verschäumung gebracht. Bei diesem sogenannten Bechertest werden die Start-, Fadenzieh- und Steigzeit sowie die Rohdichte bestimmt.

Eingesetzte Rohstoffe:

Polyol 1: Polyetheralkohol auf Basis von Saccharose, Pentaerythrit, Diethylenglykol und Propylenoxid mit einer OH-Zahl von 400 mg KOH/g und einer Viskosität von 2200 mPas bei 25°C sowie einer Funktionalität von 4.
Polyol 2: Polyetheralkohol auf Basis von Sorbitol und Propylenoxid mit einer OH-Zahl von 490 mg KOH/g, einer Viskosität von 23000 mPas bei 25°C und einer Funktionalität von 5.
Polyol 3: Polyetheralkohol auf Basis von Trimethylolpropan und Propylenoxid mit einer OH-Zahl von 160 mg KOH/g, einer Viskosität von 300 mPas bei 25°C und einer Funktionalität von 3.
Polyol 4: Polyetheralkohol auf Basis von Glyzerin und Propylenoxid mit einer OH-Zahl von 400 mg KOH/g, einer Viskosität von 400 mPas bei 25°C und einer Funktionalität von 3.
Polyol 5: Rizinusöl mit einer OH-Zahl von 160 mg KOH/g und einer Viskosität von 1000 mPas bei 20°C und einer Funktionalität von 3.
Schaumstabilisator: Tegostab® B 8462 (Evonik)
Amin-Katalysator 1: Dimethylcyclohexylamin
Amin-Katalysator 2: Lupragen® N 600 (BASF SE)
Isocyanat: Lupranat® M20 der BASF SE, NCO-Gehalt = 31,8 %
Die Mengen der Ausgangsstoffe sowie die Messergebnisse sind der Tabelle zu entnehmen.

Tabelle 1: Zusammensetzung der Polyol-Komponenten):

| Beispiel | 1 (V) | 2 (V) | 3 (V) | 4 | 5 |
|---|---|---|---|---|---|
| Polyol-Komponente | | | | | |
| Polyol 1 | 32,5 | 31,5 | 27,5 | 25,5 | 22,5 |

| | (fortgesetzt) | | | | |
|---|---|---|---|---|---|
| Beispiel | 1 (V) | 2 (V) | 3 (V) | 4 | 5 |
| Polyol 2 | 30 | 28 | 25 | 23,5 | 20 |
| Polyol 3 | 30 | 28 | 25 | 23,5 | 20 |
| Polyol 4 | | | | | 10 |
| Polyol 5 | | | 15 | 15 | 15 |
| Propylencarbonat | | 5 | | 5 | 5 |
| Tegostab B 8462 | 1,5 | 1,5 | 1,5 | 1,5 | 1,5 |
| Amin-Katalysator 1 | 1,2 | 1,2 | 1,2 | 1,2 | 1,2 |
| Amin-Katalysator 2 | 0,4 | 0,4 | 0,4 | 0,4 | 0,4 |
| Wasser | 4,4 | 4,4 | 4,4 | 4,4 | 4,4 |
| Isocyanat-Komponente | | | | | |
| Lupranat M20 | | | | | |
| Mischungsverhältnis Polyol : Iso [pbw] | 100 : 170 | 100 : 165 | 100 : 163 | 100 : 158 | 100 : 159 |
| Eigenschaften | | | | | |
| Haftung bei 35°C nach 10 min [N] | 0,3 | 0,4 | 0,5 | 2,1 | 3,3 |
| Phasenstabilität Polyolkomponente | > 6 Mo. | > 6 Mo. | 7d | 4d | > 6 Mo. |
| Sprödigkeit | spröde | spröde | spröde | i.O. | i.O. |
| V - Vergleichsbeispiel | | | | | |

Die Mengen der Einsatzstoffe sind als Gewichtsteile angegeben.

Zusammenfassung der Ergebnisse:

Beispiel 1

System ohne Rizinusöl, Propylencarbonat und Polyol biiib): Unzureichende Haftung und spröder Schaum

Beispiel 2

System mit Propylencarbonat, ohne Rizinusöl und Polyol biiib): Nur sehr geringe Verbesserung der Haftung und spröder Schaum

Beispiel 3

System mit Rizinusöl ohne Propylencarbonat und Polyol biiib): Nur sehr geringe Verbesserung der Haftung, spröder Schaum und unzureichende Phasenstabilität der Polyol-Komponente

Beispiel 4

System mit Rizinusöl und Propylencarbonat ohne Polyol biiib): Deutliche Verbesserung der Haftung und Verhinderung der Versprödung des Schaums, aber unzureichende Phasenstabilität der Polyolkomponente

Beispiel 5

Kombination aus Propylencarbonat und Rizinusöl verbessert signifikant die Haftung und Zusatz von Polyol biiib) gewährleistet gleichzeitig Phasenstabilität der Polyol-Komponente.

**Patentansprüche**

1. Verfahren zur Herstellung von Polyurethan-Hartschaumstoffen durch Umsetzung von

   a) Polyisocyanaten mit
   b) Verbindungen mit mindestens zwei mit Isocyanatgruppen reaktiven Wasserstoffatomen in Gegenwart von
   c) Treibmitteln,

   **dadurch gekennzeichnet, dass** die Komponente b) Rizinusöl bi) enthält, die Umsetzung in Gegenwart einer Verbindung d), ausgewählt aus der Gruppe enthaltend Alkylencarbonate, Kohlensäureamide und Pyrrolidone, durchgeführt wird, als Treibmittel ganz oder überwiegend Wasser verwendet wird und bei dem Verfahren keine halogenhaltigen Flammschutzmittel eingesetzt werden.

2. Verfahren nach Anspruch 1, **dadurch gekennzeichnet, dass** die Verbindung d) ausgewählt ist aus der Gruppe, enthaltend Ethylencarbonat, Propylencarbonat und 1-Methyl-2-pyrrolidon.

3. Verfahren nach Anspruch 1, **dadurch gekennzeichnet, dass** das Alkylencarbonat Propylencarbonat ist.

4. Verfahren nach Anspruch 1, **dadurch gekennzeichnet, dass** als Kohlensäureamide Harnstoff und Alkylharnstoffe eingesetzt werden.

5. Verfahren nach Anspruch 1, **dadurch gekennzeichnet, dass** als Alkylharnstoffe Tetramethylharnstoff und Diisobutytharnstoff eingesetzt werden.

6. Verfahren nach Anspruch 1, **dadurch gekennzeichnet, dass** das Pyrrolidon 1-Methyl-2-pyrrolidon ist.

7. Verfahren nach Anspruch 1, **dadurch gekennzeichnet, dass** die Verbindung d) in einer Menge von 1,5-15 Gew.-%, bezogen auf das Gewicht der Komponente b) eingesetzt wird.

8. Verfahren nach Anspruch 1, **dadurch gekennzeichnet, dass** das Rizinusöl bi) in einer Menge von 1-20 Gew.-%, bezogen auf das Gewicht der Komponente b), eingesetzt wird.

9. Verfahren nach Anspruch 1, **dadurch gekennzeichnet, dass** die Komponente b) einen Polyetheralkohol biii) mit einer Funktionalität von 2 bis 3 und einer Hydroxylzahl im Bereich von 150 bis 450 mg KOH/g enthält.

10. Verfahren nach Anspruch 9, **dadurch gekennzeichnet, dass** der Polyetheralkohol biii) in einer Menge von 3-25 Gew.-%, bezogen auf das Gewicht der Komponente b), eingesetzt wird.

11. Verfahren nach Anspruch 1, **dadurch gekennzeichnet, dass** die Komponente b) mindestens einen Polyetheralkohol bii) mit einer Funktionalität von 3,5 - 5,5 und einer Hydroxylzahl von 350 - 600 mg KOH/g enthält.

12. Verfahren nach Anspruch 11, **dadurch gekennzeichnet, dass** der Polyetheralkohol bii) in einer Menge von 35-55 Gew.-%, bezogen auf das Gewicht der Komponente b), eingesetzt wird.

13. Verfahren nach Anspruch 1, **dadurch gekennzeichnet, dass** die Komponente b) mindestens einen 3-funktionellen Polyetheralkohol biii) mit einer Hydroxylzahl im Bereich zwischen 150 und 420 mg KOH/g enthält.

14. Verfahren nach Anspruch 13, **dadurch gekennzeichnet, dass** der Polyetheralkohol biii) in einer Menge von 18-35 Gew.-%, bezogen auf das Gewicht der Komponente b), eingesetzt wird.

15. Verfahren nach Anspruch 9, **dadurch gekennzeichnet, dass** die Komponente biii) mindestens einen Polyetheralkohol biiia) und mindestens einen Polyetheralkohol biiib) enthält.

16. Verfahren nach Anspruch 15, **dadurch gekennzeichnet, dass** der Polyetheralkohol biiia) ein dreifunktioneller Polyetheralkohol mit einer Hydroxylzahl im Bereich zwischen 150 und 200 mg KOH/g ist.

17. Verfahren nach Anspruch 15, **dadurch gekennzeichnet, dass** der Polyetheralkohol biiib) ein dreifunktioneller Polyetheralkohol mit einer Hydroxylzahl im Bereich zwischen 350 und 420 mg KOH/g ist.

**18.** Verfahren nach Anspruch 1, **dadurch gekennzeichnet, dass** als alleiniges Treibmittel c) Wasser eingesetzt wird

**19.** Polyurethan-Hartschaumstoffe, herstellbar nach einem der Ansprüche 1 bis 18.

**Claims**

**1.** A process for producing rigid polyurethane foams by reacting

> a) polyisocyanates with
> b) compounds having at least two hydrogen atoms which are reactive toward isocyanate groups in the presence of
> c) blowing agents,

wherein the component b) comprises castor oil bi), the reaction is carried out in the presence of a compound d) selected from the group consisting of alkylene carbonates, carbonic acid amides and pyrrolidones, water is used as sole or predominant blowing agent, and no halogen-comprising flame retardants are used in the process.

**2.** The process according to claim 1, wherein the compound d) is selected from the group consisting of ethylene carbonate, propylene carbonate and 1-methyl-2-pyrrolidone.

**3.** The process according to claim 1, wherein the alkylene carbonate is propylene carbonate.

**4.** The process according to claim 1, wherein urea and alkylureas are used as carbonic acid amides.

**5.** The process according to claim 1, wherein tetramethylurea and diisobutylurea are used as alkylureas.

**6.** The process according to claim 1, wherein the pyrrolidone is 1-methyl-2-pyrrolidone.

**7.** The process according to claim 1, wherein the compound d) is used in an amount of 1.5-15% by weight, based on the weight of the component b).

**8.** The process according to claim 1, wherein the castor oil bi) is used in an amount of 1-20% by weight, based on the weight of the component b).

**9.** The process according to claim 1, wherein the component b) comprises a polyether alcohol biii) having a functionality of from 2 to 3 and a hydroxyl number in the range from 150 to 450 mg KOH/g.

**10.** The process according to claim 9, wherein the polyether alcohol biii) is used in an amount of 3-25% by weight, based on the weight of the component b).

**11.** The process according to claim 1, wherein the component b) comprises at least one polyether alcohol bii) having a functionality of 3.5 - 5.5 and a hydroxyl number of 350 - 600 mg KOH/g.

**12.** The process according to claim 11, wherein the polyether alcohol bii) is used in an amount of 35-55% by weight, based on the weight of the component b).

**13.** The process according to claim 1, wherein the component b) comprises at least one 3-functional polyether alcohol biii) having a hydroxyl number in the range from 150 to 420 mg KOH/g.

**14.** The process according to claim 13, wherein the polyether alcohol biii) is used in an amount of 18-35% by weight, based on the weight of the component b).

**15.** The process according to claim 9, wherein the component biii) comprises at least one polyether alcohol biiia) and at least one polyether alcohol biiib).

**16.** The process according to claim 15, wherein the polyether alcohol biiia) is a trifunctional polyether alcohol having a hydroxyl number in the range from 150 to  200 mg KOH/g.

**17.** The process according to claim 15, wherein the polyether alcohol biiib) is a trifunctional polyether alcohol having a hydroxyl number in the range from 350 to 420 mg KOH/g.

**18.** The process according to claim 1, wherein water is used as sole blowing agent c).

**19.** A rigid polyurethane foam which can be produced according to any of claims 1 to 18.


**Revendications**

**1.** Procédé pour la production de mousses rigides de polyuréthane, par mise en réaction

    a) de polyisocyanates avec
    b) des composés comportant au moins deux atomes d'hydrogène réactifs avec des groupes isocyanate, en présence
    c) d'agents d'expansion,

**caractérisé en ce que** le composant b) contient de l'huile de ricin bi), la réaction est effectuée en présence d'un composé d), choisi dans le groupe contenant des carbonates d'alkylène, des amides d'acide carbonique et des pyrrolidones, on utilise comme agent d'expansion en totalité ou en majeure partie l'eau et dans le procédé on n'utilise pas d'agents ignifuges halogénés.

**2.** Procédé selon la revendication 1, **caractérisé en ce que** le composé d) est choisi dans le groupe contenant la carbonate d'éthylène, le carbonate de propylène et la 1-méthyl-2-pyrrolidone.

**3.** Procédé selon la revendication 1, **caractérisé en ce que** le carbonate d'alkylène est le carbonate de propylène.

**4.** Procédé selon la revendication 1, **caractérisé en ce qu'**on utilise comme amides d'acide carbonique l'urée et des alkylurées.

**5.** Procédé selon la revendication 1, **caractérisé en ce qu'**on utilise comme alkylurées la tétraméthylurée et la diisobutylurée.

**6.** Procédé selon la revendication 1, **caractérisé en ce que** la pyrrolidone est la 1-méthyl-2-pyrrolidone.

**7.** Procédé selon la revendication 1, **caractérisé en ce qu'**on utilise le composé d) en une quantité de 1,5-15 % en poids, par rapport au poids du composant b).

**8.** Procédé selon la revendication 1, **caractérisé en ce qu'**on utilise l'huile de ricin bi) en une quantité de 1-20 % en poids, par rapport au poids du composant b).

**9.** Procédé selon la revendication 1, **caractérisé en ce que** le composant b) contient un polyétheralcool biii) ayant une fonctionnalité de 2 à 3 et un indice de groupes hydroxy dans la plage de 150 à 450 mg de KOH/g.

**10.** Procédé selon la revendication 9, **caractérisé en ce qu'**on utilise le polyétheralcool biii) en une quantité de 3-25 % en poids, par rapport au poids du composant b).

**11.** Procédé selon la revendication 1, **caractérisé en ce que** le composant b) contient au moins un polyétheralcool bii) ayant une fonctionnalité de 3,5-5,5 et un indice de groupes hydroxy de 350 - 600 mg de KOH/g.

**12.** Procédé selon la revendication 11, **caractérisé en ce qu'**on utilise le polyétheralcool bii) en une quantité de 35-55 % en poids, par rapport au poids du composant b).

**13.** Procédé selon la revendication 1, **caractérisé en ce que** le composant b) contient au moins un polyétheralcool trifonctionnel biii) ayant un indice de groupes hydroxy dans la plage comprise entre 150 et 420 mg de KOH/g.

**14.** Procédé selon la revendication 13, **caractérisé en ce qu'**on utilise le polyétheralcool biii) en une quantité de 18-35 % en poids, par rapport au poids du composant b).

**15.** Procédé selon la revendication 9, **caractérisé en ce que** le composant biii) contient au moins un polyétheralcool biiia) et au moins un polyétheralcool biiib).

**16.** Procédé selon la revendication 15, **caractérisé en ce que** le polyétheralcool biiia) est un polyéther-alcool trifonctionnel ayant un indice de groupes hydroxy dans la plage comprise entre 150 et 200 mg de KOH/g.

**17.** Procédé selon la revendication 15, **caractérisé en ce que** le polyétheralcool biiib) est un polyéther-alcool trifonctionnel ayant un indice de groupes hydroxy dans la plage comprise entre 350 et 420 mg de KOH/g.

**18.** Procédé selon la revendication 1, **caractérisé en ce que** l'eau est utilisée somme seul agent d'expansion c).

**19.** Mousses rigides de polyuréthane, pouvant être produites selon l'une quelconque des revendications 1 à 18.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5798533 A
- WO 2004009667 A
- EP 1806374 A
- EP 672697 A
- US 2008051481 A

**In der Beschreibung aufgeführte Nicht-Patentliteratur**

- Kunststoff-Handbuch. 1966, vol. 7
- KUNSTSTOFF-HANDBUCH
- KUNSTSTOFF-HANDBUCH. 1993
- KUNSTSTOFF-HANDBUCH. Carl Hanser Verlag
- Polyurethane. Kunststoffhandbuch. Carl-Hanser-Verlag, 1966, vol. 7
- KUNSTSTOFFHANDBUCH. 1983
- KUNSTSTOFFHANDBUCH. 1993